# EUROPÄISCHE PATENTANMELDUNG

(11) **EP 4 656 921 A1**
(43) Veröffentlichungstag der Anmeldung: **03.12.2025**
(21) Anmeldenummer: 24178263.0
(22) Anmeldetag: 27.05.2024
(51) Int. Cl.: F16L 11/12, F16L 11/11, H02G 3/04, B29C 48/00, B29C 48/09, B29C 48/13, B29C 48/21, B29C 48/30, B23C 3/20, B23C 3/30

(54) **KUNSTSTOFFWELLROHR FÜR KLIMA- UND/ODER LÜFTUNGSTECHNIK**

(71) Anmelder: UNICOR GmbH, 97437 Hassfurt (DE)
(72) Erfinder: Koßner, Hubert, 97523 Schwanfeld (DE)
(74) Vertreter: Wagner, Jürgen

(57) **Zusammenfassung**

Kunststoffwellrohr für Klima- und/oder Lüftungstechnik, als einlagiges oder zweilagiges unrundes Wellrohr 1, 1a ausgebildet, welches ein Wellenprofil 10 aufweist, dass die Außenseite des Wellrohrs 1, 1a bildet, wobei in mindestens einem der Umfangsabschnitte Ui2 mit starker Krümmung R2 das Wellenprofil 10 größere Wellenhöhe H, vorzugsweise zumindest im Durchschnitt größere Wellenhöhe H aufweist, als in mindestens einem der Umfangsabschnitte I1 mit schwacher Krümmung R1.

## Beschreibung

Die Erfindung betrifft Kunststoffwellrohre mit den Merkmalen gemäß dem Oberbegriff des Patentanspruchs 1.

Bei der Erfindung handelt es sich um ein vorzugsweise nicht kreisrundes Wellrohr. Das Wellrohr wird mithilfe eines ansich bekannten Korrugators in ansich bekannter Weise hergestellt. Das Wellrohr kann als einwandiges Wellrohr oder als doppelwandiges Wellrohr ausgebildet sein. Das doppelwandige Wellrohr besteht aus einem im wesentlichen glatten Innenrohr und einem ein Wellenprofil aufweisenden Außenrohr. Das Innenrohr ist vorzugsweise als glattes Rohr ausgebildet, kann aber auch eine geringe Welligkeit aufweisen. Rohre dieser Art werden beispielsweise als Teil eines Raumbelüftungssystems im Baugewerbe eingesetzt, und zwar meist als Lüftungsrohre. Ein anderer Anwendungsbereich für Rohre dieser Bauart ist im Baugewerbe auch als Rohr zur Führung darin aufgenommener Kabel.

Diese Wellrohre werden hauptsächlich hinsichtlich folgender Kriterien bewertet:
- Größe der von der Innenhaut umschlossenen Querschnittsfläche F1. Diese soll möglichst groß sein. Im Falle von Ausführungen als Lüftungsrohre soll der von der Innenhaut umschlossene Strömungsraum (Luftkanal) möglichst groß sein.
- Eignung zu Installationszwecken mit geringem Aufwand zerstörungsfrei gebogen werden zu können. Das Rohr soll möglichst flexibel sein.
- Widerstandsfähigkeit gegen äußere Krafteinflüsse (beispielsweise Druckbelastung) soll möglichst groß sein.

Die ingenieurmäßige Herausforderung besteht darin, die genannten, teils widerstrebenden Kriterien durch die Wahl einer geeigneten Geometrie zu optimieren.

Der Stand der Technik kennt eine Vielzahl von Lösungen, deren wesentliches Unterscheidungsmerkmal die geometrische Ausgestaltung der Querschnittsfläche (ovale Ausführung, Brotlaibform, Stundenglasform usw.) und die Ausprägung der Profilparameter des Wellenprofils ist, und zwar des Profilparameters Wellenbreite und Wellenhöhe.

Der Erfindung liegt die Aufgabe zugrunde, ein Kunststoffwellrohr zu schaffen, das bei unrunder Querschnittsform möglichst großen inneren Querschnitt aufweist und dabei hohe Biegbarkeit zu Installationszwecken und hohe Widerstandsfähigkeit gegen Beschädigungen im Betrieb aufweist, vorzugsweise sollen bevorzugte Ausführungen als Strömungsrohre möglichst kleinen Strömungswiderstand haben.

Die Erfindung löst die Aufgabe mit dem Gegenstand des Hauptanspruchs 1. Bei diesem Gegenstand handelt es sich um ein Kunststoffwellrohr für Klima- und/oder Lüftungstechnik als einlagiges oder zweilagiges Wellrohr ausgebildet, welches ein Wellenprofil aufweist, das die Außenseite des Wellrohrs bildet.

Vorzugsweise ist vorgesehen,
- dass das Wellenprofil aus in Richtung der Achse des Wellrohrs hintereinander angeordneten Wellenbergen mit zwischen unmittelbar benachbarten Wellenbergen angeordneten Wellentälern ausgebildet ist,
- dass der Außenumfang des Wellenprofils durch den äußeren Umfang der Wellenberge gebildet ist und unrund oder rund ausgebildet ist,
- dass der Innenumfang des Wellenprofils durch den äußeren Umfang der Wellentäler gebildet ist und unrund ausgebildet ist.

Die erfindungsgemäße Lösung sieht vor, dass der Innenumfang einen oder mehrere Umfangsabschnitte mit starker Krümmung und einen oder mehrere Umfangsabschnitte mit schwacher Krümmung aufweist,
wobei in mindestens einem der Umfangsabschnitte mit starker Krümmung das Wellenprofil größere Wellenhöhe, vorzugsweise zumindest im Durchschnitt größere Wellenhöhe aufweist, als in mindestens einem der Umfangsabschnitte mit schwacher Krümmung.

Hierdurch kann im Vergleich zu Wellrohren, in denen die Profilhöhe H, d.h. die Wellenhöhe des Wellenprofils über den Umfang des Wellenprofils konstant ist, die Fläche des Querschnitts nennenswert vergrößert ist und bei Ausführungen als Lüftungsrohre der Strömungswiderstand verringert ist. Die erfindungsgemäße Ausgestaltung des Wellenprofils mit großer Profilhöhe H in einem Umfangsabschnitt starker Krümmung ist signifikant für die Erreichung der Widerstandsfähigkeit gegen äußere Krafteinflüsse (beispielsweise für das Erreichen der Prüfkraft nach der Norm DIN EN ISO 61386-24). In einem Umfangsabschnitt schwacher Krümmung kann hingegen die Profilhöhe H kleiner ausgeführt werden, da dieser Bereich vorzugsweise nur unwesentlich zum Erreichen der erforderlichen Prüfkräfte beiträgt. In der Konsequenz vergrößert sich bei der erfindungsgemäßen Ausgestaltung bei nahezu gleicher Widerstandsfähigkeit die Fläche F des Querschnitts. Umfangsabschnitte mit schwacher Krümmung, d.h. nicht großem Krümmungsradius R können konkav oder konvex ausgeführt werden. Es kann sich bei der sogenannten schwachen Krümmung aber auch um einen unendlich großen Krümmungsradius also eine Gerade oder eine andere Kurvenform handeln.

Die Profilgeometrie ist vorzugsweise so ausgeführt, dass ein stetiger Übergang zwischen den unterschiedlichen Wellenhöhen stattfindet. Dies kann bedeuten, dass die Wellenhöhe H, vorzugsweise in einem mittleren Bereich eines Umfangsabschnitts mit schwacher Krümmung ein Minimum und die Wellenhöhe H vorzugsweise in einem mittleren Bereich eines Umfangsabschnitts mit starker Krümmung ein Maximum hat.

Das Wellenprofil kann aber auch so ausgeführt sein, dass sich das jeweilige Minimum der Profilhöhe, vorzugsweise im Umfangsabschnitt schwacher Krümmung, oder das jeweilige Maximum der Profilhöhe, vorzugsweise im Umfangsabschnitt starker Krümmung über einen größeren Bereich erstreckt, beispielsweise die Profilhöhe in dem Umfangsabschnitt starker Krümmung im gesamten Umfangsabschnitt maximal ist.

Besonders bevorzugte Ausführungsbeispiele ergeben sich mit den Merkmalen der Unteransprüche. Was die verschiedenen Umfangsabschnitte, d.h. Umfangsabschnitt mit starker Krümmung und Umfangsabschnitt mit schwacher Krümmung betrifft, ist der Begriff starke Krümmung und der Begriff schwache Krümmung primär dahingehend zu verstehen, dass in dem Umfangsabschnitt starker Krümmung die Krümmung stärker ist als in dem Umfangsabschnitt schwacher Krümmung. Starke Krümmung heißt relativ geringer Krümmungsradius, der konstant oder variierend in dem betreffenden Umfangsabschnitt ausgebildet sein kann. Schwache Krümmung heißt relativ großer Krümmungsradius, der ebenfalls konstant oder variierend über den Abschnitt ausgebildet sein kann. Unter schwacher Krümmung ist auch ein linearer Verlauf, d.h. unendlicher Krümmungsradius zu verstehen und insbesondere auch eine konkave Ausgestaltung.

Bei bevorzugten Ausführungen kann vorgesehen sein, dass der Innenumfang mindestens zwei, vorzugsweise einander gegenüberliegende Umfangsabschnitte mit starker Krümmung und mindestens zwei, vorzugsweise einander gegenüberliegende Umfangsabschnitte mit schwacher Krümmung aufweist. Die Querschnittsform solcher Rohre kann hinsichtlich des Innenumfangs symmetrisch oder auch asymmetrisch ausgebildet sein.

Bevorzugte Ausführungen können vorsehen, dass zwei aneinander anschließende, benachbarte Umfangsabschnitte des Innenumfangs, von denen der eine als Umfangsabschnitt starker Krümmung und der andere als Umfangsabschnitt schwacher Krümmung ausgebildet ist, hinsichtlich der unterschiedlichen Wellenhöhe des Wellenprofils und/oder hinsichtlich ihrer unterschiedlichen Krümmung stetig ineinander übergehen, vorzugsweise unter Ausbildung eines stetigen Übergangsabschnitts.

Bei besonders bevorzugten Ausführungen kann für die Ausgestaltung des Wellenprofils innerhalb des Umfangsabschnitts starker Krümmung, d.h. entlang dieses Umfangsabschnitts betrachtet, vorgesehen sein, dass innerhalb von einem oder mehreren, vorzugsweise jedem der Umfangsabschnitte mit starker Krümmung in dem Wellenprofil entlang dem Umfangsabschnitt die Wellenhöhe und/oder die Krümmung des Umfangsabschnitts konstant oder variabel ausgebildet ist, vorzugsweise unter Ausbildung eines, vorzugsweise konvexen Maximums oder unter Ausbildung mehrerer Maxima variabel, vorzugsweise alternierend variabel ausgebildet.

Bei bevorzugten Weiterbildungen kann vorgesehen sein, dass der Verlauf der variierenden Profilhöhe und/oder Krümmung entlang dem Umfangsabschnitt starker Krümmung stetig ist.

Bei besonderen Ausführungen kann für die Ausgestaltung des Wellenprofils innerhalb des Umfangsabschnitts schwacher Krümmung, d.h. für die Ausgestaltung entlang dieses Umfangsabschnitts vorgesehen sein, dass innerhalb von einem oder mehreren, vorzugsweise jedem der Umfangsabschnitte mit schwacher Krümmung in dem Wellenprofil entlang dem Umfangsabschnitt die Wellenhöhe und/oder die Krümmung des Umfangsabschnitts als variabel ausgebildet ist, vorzugsweise unter Ausbildung eines vorzugsweise konkaven Minimums oder mehrerer Minima variierend, vorzugsweise alternierend variierend ausgebildet.

Bei bevorzugten Weiterbildungen kann vorgesehen sein, dass der Verlauf der variierenden Wellenhöhe und/oder Krümmung entlang dem Umfangsabschnitt schwacher Krümmung stetig ist.

Bevorzugte Ausführungen können hinsichtlich der Form des Innenumfangs und/oder der Form des Außenumfangs vorsehen, dass die Form des Innenumfangs und/oder die Form des Außenumfangs unrund ausgebildet ist, vorzugsweise als Ellipsenform und/oder als Stundenglasform und/oder als Brotlaibform, wobei vorzugsweise vorgesehen ist, dass in Abwandlung einer oder mehrerer der oben genannten unrunden Formen mindestens eine oder beide der einander gegenüberliegenden Umfangsabschnitte schwacher Krümmung konvex ausgebildet ist bzw. sind und/oder konkav ausgebildet ist bzw. sind und/oder mit zumindest abschnittsweise linearem Verlauf ausgebildet ist bzw. sind..

Was die Ausgestaltung des Wellenprofils betrifft, sehen besonders bevorzugte Ausführungen vor,dass entlang dem Innenumfang in dem Wellenprofil die Profilparameter Wellenhöhe und Wellenbreite variieren und vorzugsweise zusätzlich auch Wellenfussbreite und/oder Wellenanstiegswinkel und/oder Teilung variieren bzw. variiert, indem in dem Umfangsabschnitt starker Krümmung die Wellenhöhe den Wert H2, die Wellenbreite den Wert B2, die Wellenfussbreite den Wert A2/2, der Wellenanstiegswinkel den Wert α2 und die Teilung den Wert T2 aufweist, und in dem Umfangsabschnitt schwacher Krümmung die Wellenhöhe den Wert H1, die Wellenfussbreite den Wert A1/2, der Wellenanstiegswinkel den Wert α1 und die Teilung den Wert T1 aufweist, wobei die Wellenhöhe und die Wellenbreite folgende Relation bilden:
- Relation 1 (Wellenprofilvariante 1): H2 > H1 und B2 = B1
   oder
- Relation 2 (Wellenprofilvariante 2): H2 > H1 und B2 ≠ B1, vorzugsweise B2 > B1
   oder
- Relation 3 (Wellenprofilvariante 3): H2 > H1 und B2 < B1

Bevorzugte Weiterbildungen können vorsehen:
Relation 1.1:
   dass die Relation 1 (Wellenprofilvariante 1) in Kombination mit einer oder mehreren der folgenden Relationen gilt:
   - A2/2 < A1/2
   - α2 = α1
   - T2 = T1
   oder
Relation 1.2:
   dass die Relation 2 (Wellenprofilvariante 2) in Kombination mit einer oder mehrerer folgender Relationen gilt:
   - A2/2 < A1/2
   - α2 ≠ α1, vorzugsweise α2 < α1
   - T2 = T1
   oder
Relation 1.3:
   dass die Relation 3 (Wellenprofilvariante 3) in Kombination mit einer oder mehreren der folgenden Relationen gilt:
   - A2/2 = A1/2
   - α2 ≠ α1, vorzugsweise α2 > α1
   - T2 = T1

Gegenstand der Erfindung ist vorzugsweise auch ein Formbackenpaar für den Einsatz in einem Korrugator zur Herstellung eines Wellrohres nach einem der auf das Wellrohr gerichteten Ansprüche, wobei das Formbackenpaar aus einem ersten Formbacken und einem zweiten Formbacken, d.h. beispielsweise linken Formbacken oder rechten Formbacken, gebildet ist, und durch die einander gegenüberliegenden Innenseiten des ersten und des zweiten Formbackens die innere Formfläche des Formbackenpaares gebildet ist. Erfindungsgemäß kann vorgesehen sein, dass die innere Formfläche des Formbackenpaares komplementär mit der Außenseite des herzustellenden Kunststoffwellrohrs ausgebildet ist.

Bei besonders bevorzugten Ausführungen kann eine besonders günstige Fertigung der Formbacken vorgesehen sein. Es kann beispielsweise vorgesehen sein, dass das Formbackenpaar gefertigt ist, indem zur Herstellung der inneren Formfläche die Innenfläche des ersten und des zweiten Formbacken in einem ersten Schritt ausgefräst wird unter Herstellung von ausschließlich Umfangsabschnitten starker Krümmung und in einem zweiten Schritt eine oder mehrere der im ersten Schritt hergestellten Umfangsabschnitte starker Krümmung abgefräst werden unter Herstellung von einem oder mehreren Umfangsabschnitten schwacher Krümmung.

Nachfolgend wird die Erfindung anhand von Zeichnungen noch weiter erläutert.

Dabei zeigen:

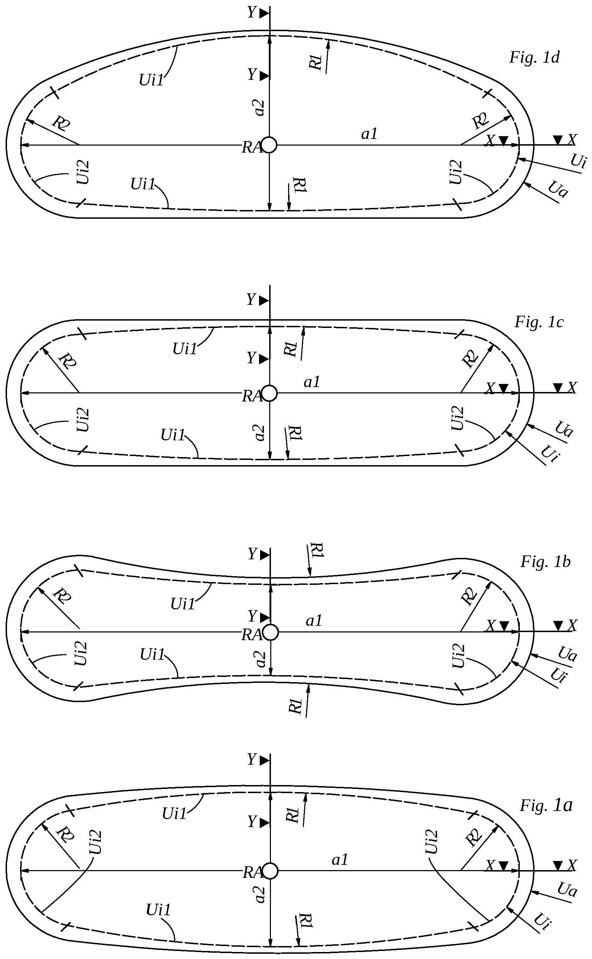

- Fig. 1a-1d:: Querschnitt des Wellrohrs senkrecht zur Rohrachse, und zwar für vier Wellrohrausführungen, die sich in der Form des Rohrquerschnitts unterscheiden, wie folgt:
- Fig. 1a:: Querschnitt der Wellrohrausführung A;
- Fig. 1b:: Querschnitt der Wellrohrausführung B;
- Fig. 1c:: Querschnitt der Wellrohrausführung C;
- Fig. 1d:: Querschnitt der Wellrohrausführung D;

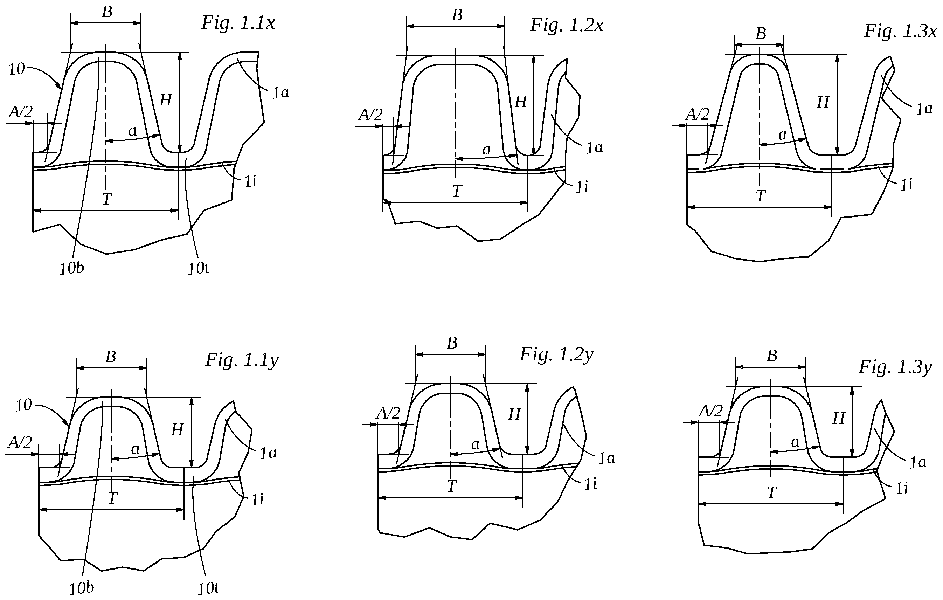

- Fig. 1.1x und Fig. 1.1y:: Längsschnitte einer Wellenprofilvariante 1 bei den Wellrohrausführungen der Fig. 1a bis 1d, wobei Fig. 1.1x ein Längsschnitt entlang der horizontalen Schnittebene X-X in den Fig. 1a bis 1d ist und Fig. 1.1y ein Längsschnitt entlang der vertikalen Schnittebene Y-Y in den Fig. 1a bis 1d ist;
- Fig. 1.2x und Fig. 1.2y:: Längsschnitte einer Wellenprofilvariante 2 bei den Wellrohrausführungen der Fig. 1a bis 1d, wobei Fig. 1.2x ein Längsschnitt entlang der horizontalen Schnittebene X-X in den Fig. 1a bis 1d ist und Fig. 1.2y ein Längsschnitt entlang der vertikalen Schnittebene Y-Y in den Fig. 1a bis 1d ist;
- Fig. 1.3x und Fig. 1.3y:: Längsschnitte einer Wellenprofilvariante 3 bei den Wellrohrausführungen der Fig. 1a bis 1d, wobei Fig. 1.3x ein Längsschnitt entlang der horizontalen Schnittebene X-X in den Fig. 1a bis 1d ist und Fig. 1.3y ein Längsschnitt entlang der vertikalen Schnittebene Y-Y in den Fig. 1a bis 1d ist;

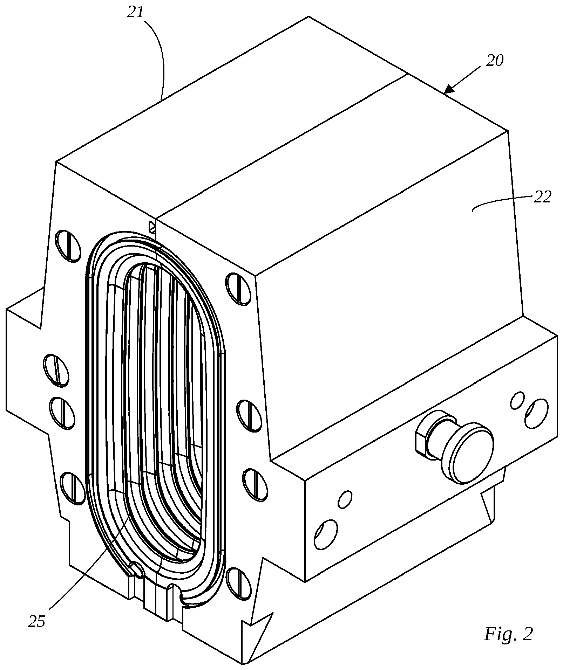

- Fig. 2: perspektivische Ansicht eines Formbackenpaares

Bei den dargestellten Ausführungsbeispielen handelt es sich um Kunststoffverbundrohre ausgebildet als doppellagige Wellrohre mit einem gewellten Außenrohr 1a und einem weitgehend glatten Innenrohr 1i, welches koaxial mit der Achse RA des Wellrohrs in dem gewellten Außenrohr 1a angeordnet und vorzugsweise mit den Wellentälern des Außenrohrs 1a verschweißt ist. Das gewellte Außenrohr 1a und das glatte Innenrohr 1i ist in den Längsschnittdarstellungen Fig 1.1x und y bis Fig. 1.3x und y im Schnitt erkennbar.

In den Figuren 1a bis 1d sind vier verschiedene Wellrohrausführungen A, B, C und D dargestellt. Die Ausführungen unterscheiden sich in der Form des Wellrohrquerschnitts, d.h. in der Form des inneren Umfangs Ui, der durch die Umfangskontur des Innenrohrs 1i gebildet ist.

Bei entsprechenden Ausführungen von einwandigen Wellrohren wird der Innenumfang Ui durch die Umfangskontur gebildet, die durch die Wellentäler gebildet wird.

Der innere Umfang Ui ist bei den Wellrohrausführungen A, B, C und D, wie aus den Querschnittsdarstellungen erkennbar, jeweils unrund. Der äußere Umfang Ua, der durch die Kontur des äußeren Umfangs der Wellenberge gebildet wird, ist bei den Ausführungen A, B, C und D, wie in den Querschnittsdarstellungen erkennbar, ebenfalls unrund, jedoch in der Form teilweise, d.h. in bestimmten Umfangsabschnitten, von der Form des Innenumfangs Ui etwas abweichend.

Bei der Wellrohrausführung A in Fig. 1a ist die Form des inneren Umfangs Ui elliptisch mit einer großen horizontale Achse a1 und einer kleinen vertikalen Achse a2. Die Umfangskontur ist jeweils symmetrisch, und zwar um die horizontale Mittelachse und um die vertikale Mittelachse. Der Umfang Ui weist zwei gegenüberliegende Umfangsabschnitte Ui2 mit starker Krümmung, kleinem Krümmungsradius R2, und zwei gegenüberliegenden Umfangsabschnitte Ui1 mit schwacher Krümmung, großem Krümmungsradius R1, auf. Die Umfangsabschnitte schließen tangential jeweils stetig aneinander an unter Bildung der symmetrischen elliptischen Form des inneren Umfangs Ui.

Die Wellrohrausführung B in Fig. 1b ist ebenfalls symmetrisch ausgebildet. Im Unterschied zu der Ausführung A sind bei der Ausführung B die schwach gekrümmten Umfangsabschnitte Ui1 jedoch nicht konvex, sondern konkav. Diese Querschnittsform wird in der Praxis als Stundenglasform bezeichnet.

Die Wellrohrausführung C in Fig. 1c unterscheidet sich von den Wellrohrausführungen A und B darin, dass bei der Wellrohrausführung C die gegenüberliegenden Umfangsabschnitte Ui1 jeweils linear zueinander parallel ausgebildet sind, zwecks Bildung von ebenen Auflagerflächen auf diesen gegenüberliegenden Seiten.

Die Wellrohrausführung D in Fig. 1d wird in der Praxis als Brotlaibform bezeichnet. Die Querschnittsform ist unsymmetrisch. Die gegenüberliegenden Abschnitte Ui1 sind in diesem Fall unterschiedlich gestaltet. Der untere Umfangsabschnitt Ui1 ist sehr schwach gekrümmt. Der am äußeren Umfang Ua ausgebildete zugeordnete untere Umfangsabschnitt Ua1 ist linear, d.h. Krümmungsradius unendlich zwecks Bildung einer Auflagerfläche des Rohrs. Der obere Umfangsabschnitt Ui1 ist konvex gekrümmt, und zwar stärker gekrümmt als die einander gegenüberliegenden Umfangsabschnitt Ui1 bei der Wellrohrausführung A in Fig. 1a.

Wesentlich ist, dass bei allen dargestellten Wellrohrausführungen A bis D, wie aus den Fig. 1a bis 1d aus dem Vergleich des Verlaufs von Ui und Ua erkennbar ist, in den stark gekrümmten Umfangsabschnitten Ui2 die Profilhöhe H größer ist als in den Umfangsabschnitten Ui1. Innerhalb der Umfangsabschnitte Ui2 und Ui1 ist die Profilhöhe H jeweils ungefähr konstant, wobei in den schwach gekrümmten Umfangsabschnitten Ui1 im mittleren Bereich ein Minimum der Profilhöhe H ausgebildet ist. Im Bereich des Übergangs der Umfangsabschnitte Ui2 und Ui1 ist bei den in den Figuren dargestellten Ausführungsbeispielen der Übergang zwischen der großen Profilhöhe H und der kleineren Profilhöhe H stetig, wie ebenfalls aus dem Verlauf von Ui und Ua in den Figuren 1a bis 1d erkennbar ist.

Die Wellenprofilparameter H, B, T, A und α sind in den Fig. 1.1x und y bis Fig. 1.3x und y im Einzelnen dargestellt. Diese Figuren zeigen drei verschiedene Wellenprofilvarianten, nämlich die Varianten 1, 2 und 3. Diese Wellenprofilvarianten sind jeweils bei den in der Querschnittsform sich unterscheidenden Wellrohrausführungen A bis D der Figuren 1a bis 1d realisiert.

Die Figuren 1.1x und 1.1y zeigen die Wellenprofilvariante 1.

Die Figuren 1.2x und 1.2y zeigen die Wellenprofilvariante 2.

Die Figuren 1.3x und 1.3y zeigen die Wellenprofilvariante 3.

Die mit Index x bezeichneten Figuren zeigen jeweils den Schnitt X-X in dem stark gekrümmten Umfangsabschnitt Ui2 der Figuren 1a bis 1d. Die mit Index y bezeichneten Figuren zeigen jeweils den Schnitt Y-Y in den schwächer gekrümmten oder geraden Umfangsabschnitt Ui1 der Figuren 1a bis 1d.

Bei den in den Fig. 1.1x und 1.1y bis Fig. 1.3x und 1.3y eingezeichneten Profilparameter handelt es sich um

| | |
|---|---|
| H: | Profilhöhe oder Wellenhöhe des Wellenprofils; |
| B: | Wellenbreite des Wellenprofils; |
| T: | Teilung des Wellenprofils; |
| A/2: | Wellenfußbreite; |
| α: | Wellenanstiegswinkel. |

Aus dem Vergleich der mit Index x bezeichneten Schnittdarstellungen Fig. 1.1x, Fig. 1.2x und Fig. 1.3x (Schnittebene X-X im Umfangsabschnitt Ui2) mit den mit Index y bezeichneten Schnittdarstellungen Fig. 1.1y, Fig. 1.2y und Fig. 1.3y (Schnittebene Y-Y im Umfangsabschnitt Ui1) ergibt sich, wie die Profilparameter über den Umfang Ui variieren.

Im Folgenden werden die Profilparameter H, B, T, α, A/2 aus der Schnittebene X-X mit Index x und aus der Schnittebene Y-Y mit Index y bezeichnet und miteinander verglichen. Es ergeben sich für die einzelnen Profilvarianten 1, 2 und 3 folgende Relationen:
Wellenprofilvariante 1 (Fig. 1.1x und 1.1y)
   Hx > Hy
   Bx = By
   Tx = Ty
   αx = αy
   Ax/2 < Ay/2
Wellenprofilvariante 2 (Fig. 1.2x und 1.2y)
   Hx > Hy
   Bx > By
   Tx = Ty
   αx < αy
   Ax/2 < Ay/2
Wellenprofilvariante 3 (Fig. 1.3x und 1.3y)
   Hx > Hy
   Bx < By
   Tx = Ty
   αx > αy
   Ax/2 = Ay/2

Die Wellrohre, die die Profilvarianten 1, 2 und 3 realisieren unterscheiden sich durch folgende technische Eigenschaften:
Wellrohre, bei denen das Wellenprofil gemäß Wellenprofilvariante 1 ausgebildet ist, haben Fertigungsvorteile. Diese liegen darin, dass die Formbacken, die für die Fertigung solcher Wellrohre eingesetzt werden, besonders vorteilhaft herstellbar sind. Die Herstellung dieser Formbacken kann nämlich dadurch erfolgen, dass in einem ersten Schritt die innere Formfläche der Formbacken eines Formbackenpaares über den gesamten Umfang z.B. durch Fräsen mit einem einheitlichen Wellenprofil über den gesamten Umfang einheitlich mit den Profilparametern der Schnittebene X-X, d.h. über den gesamten Umfang mit den Parametern Hx, Bx, Tx, Ax/2, αx hergestellt wird. In einem zweiten Schritt wird das so über den gesamten Umfang gleichförmige hergestellte Wellenprofil so dann ausschließlich in den Umfangsabschnitten Ui1 durch Abfräsen weiterbearbeitet, und zwar im Sinne einer Reduktion der Profilhöhe Hx auf die Profilhöhe Hy. Dabei ergeben sich in diesen Profilabschnitten die weiteren Profilparameter Bx, Tx, Ax/2 und αx automatisch. Die Fertigung der Formbacken ist durch diese bei dieser Wellenprofilvariante möglichen zweistufigen Herstellung sehr einfach, d.h. einfacher als die einstufige Herstellung von Formbacken mit unterschiedlichem Wellenprofil in unterschiedlichen Umfangsabschnitten durch Fräsen.

Die Formbacken, die wie vorangehend beschrieben in zwei Stufen hergestellt werden, produzieren beim Einsatz im Korrugator Wellrohre mit dem Wellenprofil gemäß Profilvariante 1. Wellrohre mit Wellenprofil gemäß der Profilvariante 1 sind also aufgrund der einfachen Fertigung fertigungsmäßig vorteilhaft. Die Steifigkeit gegen Druckbelastungen durch äußere Druckeinwirkung auf die gegenüberliegenden schwächer gekrümmt oder eben ausgebildeten Seiten und die Biegbarkeit des Wellrohrs zu Installationszwecken sind im Sinne eines Kompromisses ausreichend gut.

Ein solches Formbackenpaar 20 mit linkem Formbacken 21 und rechtem Formbacken 22 und an der einander zugewandten Innenseite der Formbacken ausgebildeter inneren Formfläche 25 ist in Fig. 2 gezeigt.

Was die Eigenschaften der Wellrohre gemäß den Wellenprofilvarianten 2 und 3 betrifft:
Wellrohre mit Wellenprofil gemäß Profilvariante 2 weisen breitere Wellenform und dadurch erhöhte Steifigkeit gegen Druckeinwirkung auf, die auf die einander gegenüberliegenden flachen Seiten des Wellrohrs einwirken.

Wellrohre mit Wellenprofil gemäß Profilvariante 3 haben besonders schmale Wellenform und erbringen besonders gute Biegbarkeit bei der Installation der Wellrohre.

Übereinstimmendes Merkmal der Wellrohre mit Wellenprofil der Profilvarianten 1, 2 und 3 ist, dass sie jeweils in den Umfangsabschnitten starker Krümmung, d.h. in dem Umfangsabschnitten Ui2, deutlich höhere Profilhöhe H vorsehen als in den Umfangsabschnitten schwächerer Krümmung, d.h. in den Umfangsabschnitten Ui1. Diese übereinstimmende Eigenschaft der Profilvarianten 1, 2 und 3 ist wesentlich, um mit den Wellrohren bei der vorgegebenen unrunden Querschnittsform große Querschnittsflächen zu erhalten, welche im Falle von Lüftungsrohren vorteilhaft sind für die Durchströmung der Rohre und im Falle von Rohren für ein großes Aufnahmevolumen zur Führung von Kabeln oder dergleichen zu erhalten und in beiden Fällen jeweils hohe Druckfestigkeit gegen Beschädigungen durch Druckeinwirkung von außen zu erhalten, insbesondere wenn die Druckeinwirkung auf die gegenüberliegenden flachen Seiten des Wellrohrs erfolgt.

### Bezugszeichen:

- RA: Achse des Wellrohres, Rohrachse
- a1: große Achse des Rohrquerschnitts
- a2: kleine Achse des Rohrquerschnitts
- Ua: äußerer Umfang
- Ui: innerer Umfang
- Ui1: Umfangsabschnitt schwacher Krümmung
- Ui2: Umfangsabschnitt starker Krümmung
- R1: Krümmungsradius schwacher Krümmung, großer Krümmungsradius
- R2: Krümmungsradius starker Krümmung, kleiner Krümmungsradius
- H: Wellenhöhe des Wellenprofils
- B: Wellenbreite des Wellenprofils
- T: Teilung des Wellenprofis
- A/2: Wellenfussbreite
- α: Wellenanstiegswinkel
- 1: Wellrohr
- 1a: gewelltes Außenrohr
- 1i: Innenrohr
- 10: Wellenprofil
- 10b: Wellenberg
- 10t: Wellental
- 20: Formbackenpaar
- 21: erster Formbacken
- 22: zweiter Formbacken
- 25: innere Formfläche des Formbackenpaares

## Patentansprüche

1. Kunststoffwellrohr für Klima- und/oder Lüftungstechnik,
als einlagiges oder zweilagiges Wellrohr (1, 1a) ausgebildet, welches ein Wellenprofil (10) aufweist, dass die Außenseite des Wellrohrs (1, 1a) bildet, wobei vorgesehen ist,
- dass das Wellenprofil (10) aus in Richtung der Achse (RA) des Wellrohrs (1, 1a) hintereinander angeordneten Wellenbergen (10b) mit zwischen unmittelbar benachbarten Wellenbergen (10b) angeordneten Wellentälern (10t) ausgebildet ist,
- dass der Außenumfang (Ua) des Wellenprofils (10) durch den äußeren Umfang der Wellenberge (10b) gebildet ist und unrund oder rund ausgebildet ist,
- dass der Innenumfang (Ui) des Wellenprofils (10) durch den äußeren Umfang der Wellentäler (10t) gebildet ist und unrund ausgebildet ist,
**dadurch gekennzeichnet,**
**dass** der Innenumfang (Ui) einen oder mehrere Umfangsabschnitte (Ui2) mit starker Krümmung (R2) und einen oder mehrere Umfangsabschnitte (Ui1) mit schwacher Krümmung (R1) aufweist,
wobei in mindestens einem der Umfangsabschnitte (Ui2) mit starker Krümmung (R2) das Wellenprofil (10) größere Wellenhöhe (H), vorzugsweise zumindest im Durchschnitt größere Wellenhöhe (H) aufweist, als in mindestens einem der Umfangsabschnitte (11) mit schwacher Krümmung (R1).

2. Kunststoffwellrohr nach Anspruch 1,
**dadurch gekennzeichnet,**
**dass** der Innenumfang (Ui) mindestens zwei, vorzugsweise einander gegenüberliegende Umfangsabschnitte (Ui2) mit starker Krümmung (R2) und mindestens zwei, vorzugsweise einander gegenüberliegende Umfangsabschnitte (11) mit schwacher Krümmung (R1) aufweist.

3. Kunststoffwellrohr nach einem der vorangehenden Ansprüche,
**dadurch gekennzeichnet,**
**dass** zwei aneinander anschließende, benachbarte Umfangsabschnitte (11, I2) des Innenumfangs (I), von denen der eine als Umfangsabschnitt (I2) starker Krümmung (R2) und der andere als Umfangsabschnitt (11) schwacher Krümmung (R1) ausgebildet ist, hinsichtlich der unterschiedlichen Wellenhöhe (H) des Wellenprofils (10) und/oder hinsichtlich ihrer unterschiedlichen Krümmung (R2, R1) stetig ineinander übergehen, vorzugsweise unter Ausbildung eines stetigen Übergangsabschnitts.

4. Kunststoffwellrohr nach einem der vorangehenden Ansprüche,
**dadurch gekennzeichnet,**
**dass** innerhalb von einem oder mehreren, vorzugsweise jedem der Umfangsabschnitte (I2) mit starker Krümmung (R2) in dem Wellenprofil (10) entlang dem Umfangsabschnitt die Wellenhöhe (H) und/oder die Krümmung (R2) des Umfangsabschnitts konstant oder variabel ausgebildet ist, vorzugsweise unter Ausbildung eines, vorzugsweise konvexen Maximums oder unter Ausbildung mehrerer Maxima variabel, vorzugsweise alternierend variabel ausgebildet.

5. Kunststoffwellrohr nach Anspruch 4,
**dadurch gekennzeichnet,**
**dass** der Verlauf der variierenden Profilhöhe (H) und/oder Krümmung (R2) entlang dem Umfangsabschnitt (12) starker Krümmung (R2) stetig ist.

6. Kunststoffwellrohr nach einem der vorangehenden Ansprüche,
**dadurch gekennzeichnet,**
**dass** innerhalb von einem oder mehreren, vorzugsweise jedem der Umfangsabschnitte (Ui1) mit schwacher Krümmung (R1) in dem Wellenprofil (10) entlang dem Umfangsabschnitt (11) die Wellenhöhe (H) und/oder die Krümmung (R1) des Umfangsabschnitts als variabel ausgebildet ist, vorzugsweise unter Ausbildung eines vorzugsweise konkaven Minimums oder mehrerer Minima variierend, vorzugsweise alternierend variierend ausgebildet.

7. Kunststoffwellrohr nach Anspruch 6,
**dadurch gekennzeichnet,**
**dass** der Verlauf der variierenden Wellenhöhe (H) und/oder Krümmung (R1) entlang dem Umfangsabschnitt (11) schwacher Krümmung stetig ist.

8. Kunststoffwellrohr nach einem der vorangehenden Ansprüche,
**dadurch gekennzeichnet,**
**dass** die Form des Innenumfangs (Ui) und/oder die Form des Außenumfangs (Ua) unrund ausgebildet ist, vorzugsweise als Ellipsenform und/oder als Stundenglasform und/oder als Brotlaibform,
wobei vorzugsweise vorgesehen ist,
**dass** in Abwandlung einer oder mehrerer der oben genannten unrunden Formen mindestens eine oder beide der einander gegenüberliegenden Umfangsabschnitte (Ui1, Ui1) schwacher Krümmung (R1, R1) konvex ausgebildet ist bzw. sind und/oder konkav ausgebildet ist bzw. sind und/oder mit zumindest abschnittsweise linearem Verlauf ausgebildet ist bzw. sind.

9. Kunststoffwellrohr nach einem der vorangehenden Ansprüche,
**dadurch gekennzeichnet,**
**dass** entlang dem Innenumfang (Ui) in dem Wellenprofil (10) die Profilparameter Wellenhöhe (H) und Wellenbreite (B) variieren und vorzugsweise zusätzlich auch Wellenfussbreite (A/2) und/oder Wellenanstiegswinkel (α) und/oder Teilung (T) variieren bzw. variiert, indem in dem Umfangsabschnitt (Ui2) starker Krümmung (R2) die Wellenhöhe (H) den Wert H2, die Wellenbreite (B) den Wert B2, die Wellenfussbreite (A/2) den Wert A2/2, der Wellenanstiegswinkel (α) den Wert α2 und die Teilung (T) den Wert T2 aufweist, und
in dem Umfangsabschnitt (Ui1) schwacher Krümmung (R1) die Wellenhöhe (H) den Wert H1, die Wellenfussbreite (A/2) den Wert A1/2, der Wellenanstiegswinkel (α) den Wert α1 und die Teilung (T) den Wert T1 aufweist,
wobei die Wellenhöhe (H) und die Wellenbreite (B) folgende Relation bilden:
- Relation 1 (Wellenprofilvariante 1): H2 > H1 und B2 = B1
oder
- Relation 2 (Wellenprofilvariante 2): H2 > H1 und B2 ≠ B1, vorzugsweise B2 > B1
oder
- Relation 3 (Wellenprofilvariante 3): H2 > H1 und B2 < B1

10. Kunststoffwellrohr nach Anspruch 9,
**dadurch gekennzeichnet,**
Relation 1.1:
dass die Relation 1 (Wellenprofilvariante 1) in Kombination mit einer oder mehreren der folgenden Relationen gilt:
- A2/2 < A1/2
- α2 = α1
- T2 = T1
oder
Relation 1.2:
dass die Relation 2 (Wellenprofilvariante 2) in Kombination mit einer oder mehrerer folgender Relationen gilt:
- A2/2 < A1/2
- α2 ≠ α1, vorzugsweise α2 < α1
- T2 = T1
oder
Relation 1.3:
dass die Relation 3 (Wellenprofilvariante 3) in Kombination mit einer oder mehreren der folgenden Relationen gilt:
- A2/2 = A1/2
- α2 ≠ α1, vorzugsweise α2 > α1
- T2 = T1

11. Formbackenpaar für den Einsatz in einem Korrugator zur Herstellung eines Kunststoffwellrohrs nach einem der vorangehenden Ansprüche,
wobei das Formbackenpaar aus einem ersten Formbacken und einem zweiten Formbacken gebildet ist und durch einander gegenüberliegende Innenseiten des ersten und des zweiten Formbacken eine innere Formfläche des Formbackenpaares gebildet ist,
**dadurch gekennzeichnet,**
**dass** die innere Formfläche des Formbackenpaares komplementär mit der Außenseite des herzustellenden Kunststoffwellrohrs ausgebildet ist.

12. Formbackenpaar nach Anspruch 11 zur Herstellung eines Wellrohrs gem. Relation 1 (Profilvariante 1) des Anspruchs 9 und/oder gemäß Relation 1.1 des Anspruchs 10,
**dadurch gekennzeichnet,**
**dass** das Formbackenpaar gefertigt ist, indem zur Herstellung der inneren Formfläche die Innenfläche des ersten und des zweiten Formbacken in einem ersten Schritt ausgefräst wird unter Herstellung von ausschließlich Umfangsabschnitten (Ui2) starker Krümmung (R2) und in einem zweiten Schritt eine oder mehrere der im ersten Schritt hergestellten Umfangsabschnitte (Ui2) starker Krümmung (R2) abgefräst werden unter Herstellung von einem oder mehreren Umfangsabschnitten (Ui1) schwacher Krümmung (R1).
